(19)

Europäisches
Patentamt
European
Patent Office
Office européen
des brevets

(11) **EP 3 361 445 A1**

(12) **EUROPEAN PATENT APPLICATION**

(43) Date of publication:
**15.08.2018 Bulletin 2018/33**

(51) Int Cl.:
***G06T 7/11*** *(2017.01)*      ***G06T 7/62*** *(2017.01)*

(21) Application number: **17155283.9**

(22) Date of filing: **08.02.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Lim, Pascal
75013 Paris (FR)**

(72) Inventors:
• **LIM, Pascal
75013 Paris (FR)**
• **D'HUMIERES, Thomas
75010 Paris (FR)**
• **FARD, Damien
75010 Paris (FR)**

(74) Representative: **Icosa
83 avenue Denfert-Rochereau
75014 Paris (FR)**

(54) **THREE-DIMENSIONAL ECHOCARDIOGRAPHY METHOD TO QUANTIFY AORTIC VALVE CALCIFICATION**

(57)      The invention relates to a method for aortic valve calcification determination, said method comprising the steps of:
- detecting an aortic valve on a 3D medical image acquired by a non-invasive, non-radiative medical imaging technique;
- segmenting the 3D medical image in a thickness in a plurality of 2D medical slices;
- determining a region on each 2D medical slices;
- thresholding said region on each 2D medical slices, said thresholding is configured to generate 2D calcification binary images discriminating calcification regions from normal regions; and
- determining an aortic valve calcification volume.
     The invention also relates to a system for aortic valve calcification determination.

```
┌─────────────────────────────────────────┐
│ detecting aortic valve on a 3D medical   │
│ image acquired by a non-invasive,        │
│ non-radiative medical imaging technique  │
└─────────────────────────────────────────┘
                    │
                    ▼
┌─────────────────────────────────────────┐
│ segmenting the 3D image in the thickness │
│ in a plurality of 2D medical slices      │
└─────────────────────────────────────────┘
                    │
                    ▼
┌─────────────────────────────────────────┐
│ determining a region on the 2D medical   │
│ slices                                   │
└─────────────────────────────────────────┘
                    │
                    ▼
┌─────────────────────────────────────────┐
│ thresholding said region on the 2D       │
│ medical slices                           │
└─────────────────────────────────────────┘
                    │
                    ▼
┌─────────────────────────────────────────┐
│ generating 2D calcification binary       │
│ images based on the thresholding of the  │
│ region on the 2D medical slices          │
└─────────────────────────────────────────┘
                    │
                    ▼
┌─────────────────────────────────────────┐
│ computing an aortic valve calcification  │
│ volume                                   │
└─────────────────────────────────────────┘
```

**FIG. 1**

EP 3 361 445 A1

## Description

## FIELD OF INVENTION

The present invention relates to aortic valve calcification, and more particularly to evaluation and quantification of aortic valve calcification.

## BACKGROUND OF INVENTION

Aortic valve calcification, caused by calcium deposit on the valve tissue, leads to the stiffening of the aortic leaflets and the narrowing of the valve opening. Aortic valve narrowing, also known as aortic valve stenosis (or valve stenosis) is one of the most common and most serious valve disease problems. Aortic valve stenosis prevents the aortic valve from opening fully, which reduces blood flow from the heart into the aorta through the aortic valve. It can progress to become severe enough to become an obstacle to the ejection of the left ventricle and to increase strain to said left ventricle. Indeed, to maintain a sufficient flow in the aorta and a normal parietal tension, the left ventricle must concentrically enlarge. At a very advanced stage, the left ventricle may alter its systolic function.

The only definitive treatment for aortic stenosis is aortic valve replacement that can be performed by trans-aortic valve implantation (TAVI) procedure. Aortic valve replacement is indicated when severe hemodynamic consequences and/or clinical manifestations occur. However, discrepancies between the symptoms, hemodynamics and examination lead to sometimes difficult decisions to make for the physicians. Another drawback of TAVI procedure involves paravalvular leakage occurring after the intervention and resulting in a blood flow between the implanted valve and the cardiac tissue due to an inappropriate sealing. These complications are related to aortic valve calcification. Evaluating and quantifying the aortic valve calcification could allow the assessment of paravalvular leakage before TAVI procedure.

The detection of aortic valve calcification in medical images requires determining the location of the calcification regions and quantifying the amount of calcium deposited on the tissue, i.e. it requires segmenting said images. Image segmentation is usually performed by physicians by manually tracing the edges of the calcification regions. However, this manual method has some limitations as it is dependent of the physician and time-consuming.

In recent years, there has been a trend towards semi-automated and/or completely automated methods for the quantification of aortic valve calcification.

It is known to use an automatic segmentation in intravascular ultrasound images. Zhang et al. discloses an image segmentation method based on snakes and the Contourlet transform to detect coronary calcifications in a 2D image acquired by intravascular ultrasound [Zhang Q. et al., Ultrasound in Medecine and Biology, Vol. 36, No. 1, pp. 111-129, 2010]. However, intravascular ultrasound is an invasive imaging technique requiring the introduction of an ultrasound catheter tip in over a guidewire steered into the blood vessel branch to be imaged. Moreover, intravascular ultrasound is expensive, adds significant additional examination time, and it is considered as an interventional procedure that should only be performed by trained physicians. Measurement of aortic valve calcification by 2D imaging technique has also an accuracy limited by the base-apex translational motion.

Limitation of 2D imaging has been overcome by computed tomography that provides a 3D visualization of aortic valve calcification and an accurate segmentation of calcifications. US 2013/155064 discloses a method for automatic aortic valve calcification evaluation based on 3D computed tomography images. First a patient-specific aortic valve model is detected in a 3D medical image volume and an aortic valve region is defined based on said aortic valve model. Then, calcifications in said aortic valve region are segmented using a graph cuts segmentation algorithm, wherein each voxel in the aortic valve region is classified using a trained calcification detector. At the end of the procedure, a mapping of the calcifications in the aortic valve region is obtained and can be used to evaluate the patient outcome in case of TAVI procedure. However, US 2013/155064 does not disclose the quantification of aortic valve calcification.

Clavel et al. discloses the quantification of aortic valve calcification based on 3D computed tomography images using the Agatston method [Clavel et al., Journal of the American College of Cardiology, Vol. 64, No. 12, pp. 1202-1213, 2014]. Said method is based on the weighted density score given to the highest attenuation value (Hounsfield units) multiplied by area of the calcification region. In a large population based study (N=794), Clavel et al. demonstrated that computed tomography calcium score independently predicted severity of aortic valve stenosis and mortality in patients with aortic valve stenosis medically treated. These data suggested that aortic valve calcification measurement may be particularly useful for managing patient in whom clinical and echography assessments are discordant. However, computed tomography is an irradiative imaging technique, and its use raises concerns on X-ray exposure and cumulative irradiation, especially when addressed to follow-up young patients with bicuspid aortic valve stenosis.

It is therefore an object of the present invention to provide a method for aortic valve calcification determination based on 3D medical images acquired by a non-invasive, non-radiative imaging technique.

## SUMMARY

This invention relates to a method for aortic valve calcification determination, said method comprising the steps of:

- detecting an aortic valve on a 3D medical image acquired by a non-invasive, non-radiative medical imaging technique;
- segmenting the 3D medical image in a thickness in a plurality of 2D medical slices;
- determining a region on each 2D medical slices;
- thresholding said region on each 2D medical slices, said thresholding is configured to generate 2D calcification binary images discriminating calcification regions from normal regions; and
- determining an aortic valve calcification volume.

According to one embodiment, the medical imaging technique does not require any injection of a contrast agent during the procedure. According to one embodiment, the medical imaging technique is transthoracic 3D echocardiography. According to one embodiment, the method is based on the detection of an aortic valve on a 3D medical image acquired during systole. According to one embodiment, the 3D medical image of aortic valve region is segmented perpendicularly to a short axis of the aortic valve in a plurality of 2D medical slices. According to one embodiment, the region is determined by delineating the aortic annulus region. According to one embodiment, the aortic annulus region is delineated on the first and the last 2D medical slices by a circle restricted to at least three points defining the aortic valve, wherein:

- the first 2D medical slice is located under the aortic valve at the level of left ventricular outflow tract;
- the last 2D medical slice is located above the aortic valve; and
- a cylinder formed by these two circles defines the region, making it possible to obtain a circle on each 2D medical slice along the valve axis.

According to one embodiment, the thresholding of the region comprises the steps of:

- detecting the pixel with the highest signal intensity on 2D medical slices;
- allocating said pixel as a calcification region;
- comparing the difference of intensity between said calcification region's mean intensity and neighborhood pixel's intensity;
- if the difference is below a threshold (t), the pixel is allocated as a calcification region; if the difference is above a threshold (t), the pixel is not allocated as a calcification region;
- repeating preceding steps by including in the calcification region the new pixels allocated;
- ending thresholding when the intensity difference between mean intensity of calcification region and new pixel becomes larger than the threshold (t);
- determining the lowest intensity value of the calcification region; and
- binarizing all 2D medical slices based on said lowest intensity value.

According to one embodiment, the threshold (t) is 0.1. According to one embodiment, the aortic valve calcification volume is the sum of: positive pixels from binary transformed volume multiplied by pixel size, multiplied by the short axis slice thickness. According to one embodiment, the aortic valve region is divided in four segments and an aortic valve calcification volume heterogeneity coefficient is defined as a standard deviation of segmental aortic valve calcification between the four aortic valve calcification volumes of said segments. According to one embodiment, the method for aortic valve calcification determination further comprises determining the suitability of a patient for trans-aortic valve implantation (TAVI) procedure based on aortic valve calcification volume, or determining the severity of aortic valve stenosis for a patient based on aortic valve calcification, or determining the risk of stroke of a patient based on aortic valve calcification volume, or determining the best position for an aortic valve implant based on aortic valve calcification volume and binary images. This invention also relates to a system for aortic valve calcification determination, said system comprising:

- a computing unit for:

  - detecting an aortic valve on a 3D medical image acquired by a non-invasive, non-radiative medical imaging technique;
  - segmenting the 3D medical image in a thickness in a plurality of 2D medical slices;
  - determining a region on each 2D medical slices;
  - thresholding said region on each 2D medical slices, said thresholding is configured to generate 2D calcification binary images discriminating calcification regions from normal regions; and
  - determining an aortic valve calcification volume.

- a memory comprising the 3D medical image, the 2D medical slices, the threshold (t), the 2D calcification binary images and the aortic valve calcification volume;

wherein the memory is connected to the computing unit.
According to one embodiment, the thresholding of the region comprises the steps of:

- detecting the pixel with the highest signal intensity on 2D medical slices;
- allocating said pixel as a calcification region;
- comparing the difference of intensity between said calcification region's mean intensity and neighborhood pixel's intensity;
- If the difference similarity is below a (t) threshold similarity coefficient, the pixel is allocated as a calcification region; if the difference similarity is below a (t) threshold similarity coefficient, the pixel is allocated as a calcification region;
- repeating preceding steps by including in the calcification region the new pixels allocated;
- ending thresholding when the intensity difference between mean intensity of calcification region and new pixel becomes larger than a certain threshold similarity coefficient (t);
- determining a high intensity and a low intensity values corresponding to the calcification region, said low intensity value is used as a threshold defining the calcification region; and
- extending to all the 2D medical slices by binarizing them (below the threshold = black, greater than the threshold = white).

According to one embodiment, the sum of positive pixels from binary transformed volume was adjusted to pixel scale and short axis slice thickness to compute the aortic valve calcification volume.

## DEFINITIONS

In the present invention, the following terms have the following meanings:

- **"About"** is used herein to mean approximately, roughly, around, or in the region of. When the term "about" is used in conjunction with a numerical range, it modifies that range by extending the boundaries above and below the numerical values set forth.

- **"Calcification"** refers to the accumulation of calcium salts in a body tissue. Here calcification occurs on soft tissue such as heart valves.

- **"Invasive"** refers to a medical technique, method, or care that requires a lesion to the body, i.e. breaking the skin. On the contrary, **"Non-invasive"** refers to a medical technique, method, or care that leaves the body intact.

- **"Region"** refers to an area of an image that presents a particular interest. Here a region refers to the contours of the aortic valve.

- **"Flow"** refers to the blood flow from the left ventricle to the aorta.

- **"Gradient"** refers to the pressure difference between the left ventricle and aorta. A normal aortic valve has a gradient of only a few mmHg. Aortic valve stenosis will cause the decreasing of the aortic valve area leading to increased pressure gradient. These parameters are used to classify and grade the aortic stenosis as mild, moderate or severe. Patients can show abnormally low gradient in the case of mitral stenosis, heart failure, co-existent aortic regurgitation and also ischaemic heart disease.

- **"Automated"**, **"Semi-automated"** and **"Manual"** refer to operating procedures. Automated refers to an operating procedure, wherein all the steps are independent of external control. Semi-automated refers to an operating procedure, wherein at least one step is automated and at least one step is manual. Manual refers to an operating procedure, wherein all the steps are operated by hand.

- **"Short axis"** of a valve refers to a perpendicular axis to the long axis of a valve obtained from 2D imaging (echocardiography, scanner or magnetic resonance imaging).

## DETAILED DESCRIPTION

This invention relates to a method for aortic valve calcification determination.

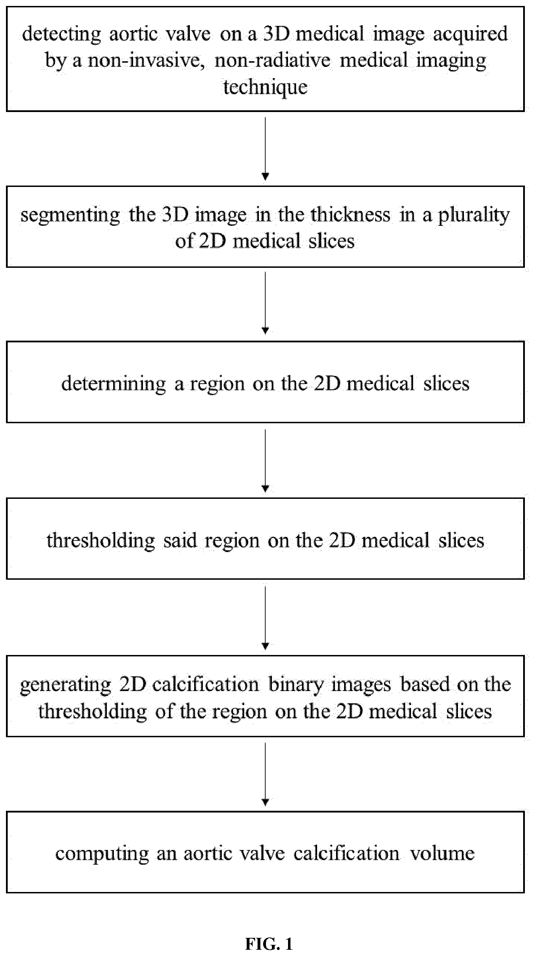

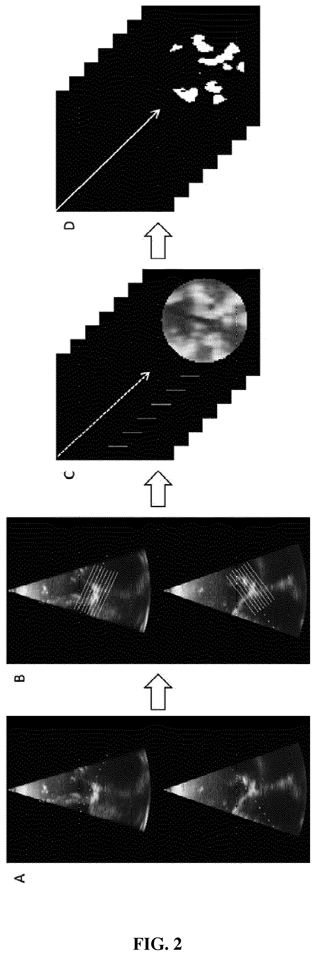

As illustrated on figure 1 and figure 2, the method for aortic valve calcification determination comprises the steps of:

- detecting an aortic valve on a 3D medical image acquired by a non-invasive, non-radiative medical imaging technique;
- segmenting the 3D medical image in a thickness in a plurality of 2D medical slices;
- determining a region on each 2D medical slices;
- thresholding said region on each 2D medical slices, said thresholding is configured to generate 2D calcification binary images discriminating calcification regions from normal regions; and
- determining an aortic valve calcification volume.

According to one embodiment, the method of present invention is manual.

According to one embodiment, the method of present invention is semi-automated.

According to one embodiment, the method of present invention is automated.

According to one embodiment, the medical imaging technique does not require any injection of a contrast agent. In this embodiment, medical complications due to allergies and contrast agents are avoided.

According to one embodiment, the medical imaging technique involves ultrasound beam reflection. In this embodiment, ultrasound beam reflection provides a nonlinear signal of anatomic structures present in the aortic valve region, mainly composed by noises, calcified and restricted aortic valve leaflets.

According to one embodiment, the medical imaging technique is echography.

According to one embodiment, the medical imaging technique is 3D echocardiography. The advantages of 3D echocardiography are the absence of radiation, typically X-rays, the non-invasive nature of said imaging technique and the limited additional cost.

According to one embodiment, the medical imaging technique is transthoracic 3D echocardiography.

According to one embodiment, the method is based on the detection of an aortic valve on a 3D medical image acquired during systole, i.e. while the aortic valve is open. The advantage of taking open-valve images is to have an excellent discrimination between normal valves and pathological valves. Indeed, a normal valve will open completely in systole, whereas a pathological valve will only partially open.

According to one embodiment, the segmentation of the 3D medical image of aortic valve region is manual.

According to one embodiment, the segmentation of the 3D medical image of aortic valve region is semi-automated.

According to one embodiment, the segmentation of the 3D medical image of aortic valve region is automated.

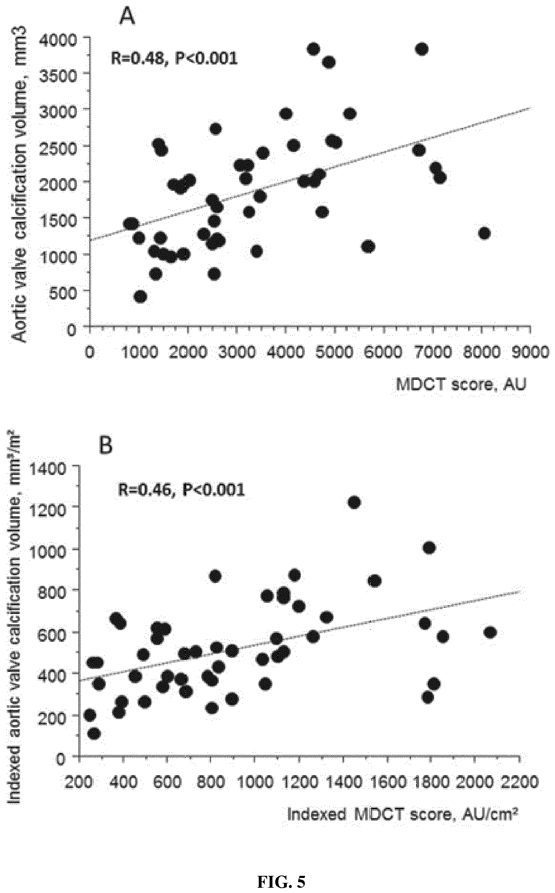

According to one embodiment, the 3D medical image of aortic valve region is not segmented in transverse 2D medical slices. Using transverse slices for a manual selection of calcification belonging to aortic valve, like in multidetector computed tomography (MDCT) calcium scoring method, is challenging because of the difficulty to identify the aortic valve from a transverse slice. This may overestimate calcium weight especially when extensive calcifications are observed for mitral and aortic valve and explain the discrepancy between 3D echocardiography and MDCT for extreme aortic valve calcification (figure 5).

According to one embodiment, the 3D medical image of aortic valve region is segmented perpendicularly to a short axis of the aortic valve in a plurality of 2D medical slices. In this embodiment, the overestimation of the aortic valve calcification volume is minimized because calcium volume is computed from short axis that allows clearly identifying the aortic valve region.

According to one embodiment, a first sectional plane is defined under the aortic valve at the level of left ventricular outflow tract.

According to one embodiment, the first sectional plane is automatically defined.

According to one embodiment, the first sectional plane is manually defined.

According to one embodiment, the first sectional plane is parallel to the aortic valve plane. If said first sectional plane is not parallel to the aortic valve plane, then it results in a displacement of the aortic valve on each 2D medical slice.

According to one embodiment, a plurality of 2D medical slices are selected, from the first sectional plane to the aortic valve apex.

According to one embodiment, five to fifteen 2D medical slices are selected.

According to one embodiment, about ten 2D medical slices are preferably selected.

According to one embodiment, the 2D medical slices have a thickness of 1 mm, 2 mm, 3 mm, 4 mm, 5 mm, 6 mm, 7 mm, 8 mm, 9 mm, or 10 mm.

According to one embodiment, the thickness of the 2D medical slices is preferably 2 mm.

According to one embodiment, the delineation of the region does not comprise an image segmentation based on snakes. Indeed, the lack of clear delineation between the structures, inherent to the echocardiography, makes automatic segmentation impossible without changing the internal and external energies of the snake between each patient.

According to one embodiment, the region is determined by delineating the aortic annulus region.

According to one embodiment, the delineation of the aortic annulus region is manual.

According to one embodiment, the delineation of the aortic annulus region is semi-automated.

According to one embodiment, the delineation of the aortic annulus region is automated.

According to one embodiment, the aortic annulus region is delineated on the first and the last 2D medical slices by a circle restricted to three points defining the aortic valve, wherein the last 2D medical slice is located above the aortic valve. In this embodiment, a cylinder formed by these two circles defines the region, making it possible to obtain a circle on each slice along the valve axis. Furthermore, in this embodiment, the extrapolation of the circles on the first and the last 2D medical slices in a cylinder makes it possible to follow a possible misalignment of the aortic valve on the 2D medical slices.

According to one embodiment, the image processing is automatically computed using a dedicated software.

According to one embodiment, a thresholding is applied on the region.

According to one embodiment, the thresholding of the region is manual.

According to one embodiment, the thresholding of the region is semi-automated.

According to one embodiment, the thresholding of the region is automated.

According to one embodiment, the thresholding of the region comprises the steps of:

- detecting the pixel with the highest signal intensity on 2D medical slices;
- allocating said pixel as a calcification region;
- comparing the difference of intensity between said calcification region's mean intensity and neighborhood pixel's intensity;
- if the difference is below a threshold (t), the pixel is allocated as a calcification region; if the difference is above a threshold (t), the pixel is not allocated as a calcification region;
- repeating preceding steps by including in the calcification region the new pixels allocated;
- ending thresholding when the intensity difference between mean intensity of calcification region and new pixel becomes larger than the threshold (t);
- determining the lowest intensity value of the calcification region; and

- binarizing all 2D medical slices based on said lowest intensity value.

According to one embodiment, the thresholding of the region uses a region growing algorithm.

According to one embodiment, the thresholding of the region is individualized for each patient. Indeed, the region growing algorithm allows the adaptation of the threshold to each patient.

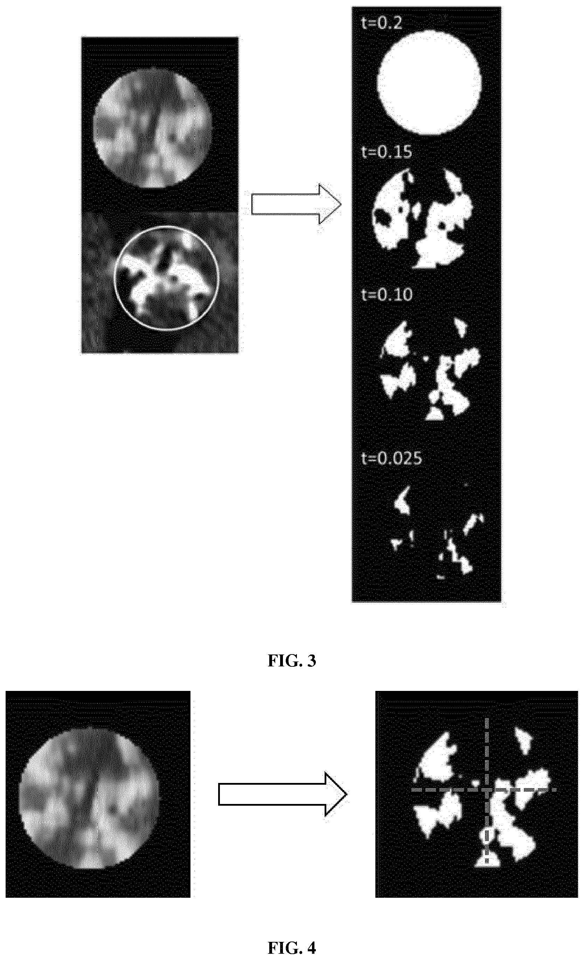

According to one embodiment, as illustrated on figure 3, the threshold (t) is 0.025, 0.05, 0.075, 0.1, 0.15, 0.20.

According to one embodiment, the threshold (t) is preferably 0.1. In this embodiment, for 256 gray-scales (8 bits), a threshold (t) of 0.1 is equivalent to 25.6 gray-scales.

According to one embodiment, the image setting and the binary transformed process are standardized.

According to one embodiment, the aortic valve calcification volume is computed using an algorithm.

According to one embodiment, the aortic valve calcification volume is the sum of positive pixels from binary transformed volume multiplied by pixel size, multiplied by the short axis slice thickness.

According to one embodiment, the aortic valve calcification volume is computed as follows:

$$V = \varepsilon \sum_{k=0}^{n} (positive\ pixel) * P$$

where V is the aortic valve calcification volume (mm³), $\varepsilon$ is the 2D medical slices thickness (mm), n is the number of 2D medical slices, and P is the pixel size (mm²).

According to one embodiment, the aortic valve calcification volume is independent from gender.

According to one embodiment, the aortic valve calcification volume is indexed to left ventricular outflow tract area to obtain $V_{index}$ in order to limit the bias between different genders and body mass index.

According to one embodiment, the time required for image setting, binary transformed process and aortic valve calcification volume computing ranges from 1 to 30 minutes.

According to one embodiment, the time required for image setting, binary transformed process and aortic valve calcification volume computing is preferably below 2 minutes.

According to one embodiment, as illustrated on figure 4, the aortic valve region is divided in four segments and the aortic valve calcification volume heterogeneity is defined as the standard deviation of segmental aortic valve calcification. In this embodiment, high standard deviation indicates heterogenous aortic valve calcium deposit.

According to one embodiment, intra-observer variability is ranging from 5 to 10%. According to one embodiment, intra-observer variability is determined for a sub-group of at least 10 patients.

According to one embodiment, inter-observer variability is ranging from 5 to 10%. According to one embodiment, inter-observer variability is determined for a sub-group of at least 10 patients.

According to one embodiment, the method of the invention is independent from hemodynamic measurements. This embodiment is advantageous for patients with impaired systolic function (low flow).

According to one embodiment, the method of the invention may be used parallel to 2D echocardiography for patients follow up. In this embodiment, said method is an additional tool, helping risk stratification and cardiologist decision-making, especially when discrepancy exists among echocardiography markers and clinical symptoms.

According to one embodiment, the method of the invention may include sclerotic structures that can reach signal intensities identical to calcium when aortic leaflets are thickened by inflammatory and fibrotic processes. This explains the unique threshold of aortic valve calcification volume defining severe aortic valve stenosis independently from gender.

According to one embodiment, the method for aortic valve calcification determination further comprises determining the severity of aortic valve stenosis for a patient based on aortic valve calcification volume and binary images.

According to one embodiment, an aortic valve calcification volume threshold of 1200 mm³ defines severe aortic valve stenosis. The aortic valve calcification volume of 1200 mm³ was associated with sensitivity and specificity associated of 87% and 98%, respectively, meaning that it was discriminating efficiently patients suffering from severe aortic valve stenosis from others.

According to one embodiment, the aortic valve calcification volume threshold to define severe aortic valve stenosis is independent from gender. On the contrary, MDCT calcium score even indexed to left ventricular outflow tract or body area needs be adjusted to men (500 AU.cm²) and women (300 AU.cm²).

According to one embodiment, the method of the present invention is used for patient follow-up and aortic valve stenosis physiopathology study.

According to one embodiment, the method of the present invention is daily practiced. Indeed, the prognosis value of aortic valve calcification volume in patient medically treated underlines the potential clinical interest in daily practice of echocardiography aortic valve calcification measurement.

According to one embodiment, the method for aortic valve calcification determination further comprises determining the suitability of a patient for trans-aortic valve implantation (TAVI) procedure based on aortic valve calcification volume and 2D binary images. The non-inferiority of TAVI over cardiac surgery in intermediate and high risk population has been demonstrated. However, the risk of paravalvular leakage is greater after TAVI than after conventional surgery. Clinical impact of significant paravalvular leakage after TAVI on patient outcome underlines the need to develop accurate imaging method for identifying high risk patients that should be referred to surgery.

According to one embodiment, aortic valve calcification volume and heterogeneity are compared to the occurrence of significant aortic valve regurgitation and the risk of paravalvular leakage after TAVI.

According to one embodiment, the method for aortic valve calcification determination further comprises determining the best position for an aortic valve implant based on aortic valve calcification volume and binary images.

According to one embodiment, the method for aortic valve calcification determination further comprises determining the risk of stroke of a patient based on aortic valve calcification volume and binary images.

According to one embodiment, the method for aortic valve calcification determination can be used for the follow up of patients suffering from atrial fibrillation or with low-flow/low-gradient.

This invention also relates to a system for implementing the method according to the invention.

In one embodiment, said system for aortic valve calcification determination comprises:

- a computing unit for:

  - detecting an aortic valve on a 3D medical image acquired by a non-invasive, non-radiative medical imaging technique;
  - segmenting the 3D medical image in a thickness in a plurality of 2D medical slices;
  - determining a region on each 2D medical slices;
  - thresholding said region on each 2D medical slices, said thresholding is configured to generate 2D calcification binary images discriminating calcification regions from normal regions; and
  - determining an aortic valve calcification volume.

- a memory comprising the 3D medical image, the 2D medical slices, the 2D calcification binary images and the aortic valve calcification volume;

wherein the memory is connected to the computing unit.

According to one embodiment, the medical imaging technique does not require any injection of a contrast agent during the procedure.

According to one embodiment, the medical imaging technique involves ultrasound beam reflection.

According to one embodiment, the medical imaging technique is echography.

According to one embodiment, the medical imaging technique is 3D echocardiography.

According to one embodiment, the medical imaging technique is transthoracic 3D echocardiography.

According to one embodiment, the detection of an aortic valve involves a 3D medical image acquired during systole, i.e. while the aortic valve is open.

According to one embodiment, the segmentation of the 3D medical image of aortic valve region is manual.

According to one embodiment, the segmentation of the 3D medical image of aortic valve region is semi-automated.

According to one embodiment, the segmentation of the 3D medical image of aortic valve region is automated.

According to one embodiment, the 3D medical image of aortic valve region is automatically segmented.

According to one embodiment, the 3D medical image of aortic valve region is not segmented in transverse 2D medical slices.

According to one embodiment, the 3D medical image of aortic valve region is segmented perpendicularly to a short axis of the aortic valve in a plurality of 2D medical slices.

According to one embodiment, a first sectional plane is defined under the aortic valve at the level of left ventricular outflow tract.

According to one embodiment, the first sectional plane is automatically defined.

According to one embodiment, the first sectional plane is manually defined.

According to one embodiment, the first sectional plane is parallel to the aortic valve plane.

According to one embodiment, a plurality of 2D medical slices are selected, from the first sectional plane to the aortic valve apex.

According to one embodiment, five to fifteen 2D medical slices are selected.

According to one embodiment, about ten 2D medical slices are preferably selected.

According to one embodiment, the 2D medical slices have a thickness of 1 mm, 2 mm, 3 mm, 4 mm, 5 mm, 6 mm, 7 mm, 8 mm, 9 mm, or 10 mm.

According to one embodiment, the thickness of the 2D medical slices is preferably 2 mm.

According to one embodiment, the delineation of the region does not comprise an image segmentation based on snakes.

According to one embodiment, the region is determined by delineating the aortic annulus region.

According to one embodiment, the delineation of the aortic annulus region is manual.

According to one embodiment, the delineation of the aortic annulus region is semi-automated.

According to one embodiment, the delineation of the aortic annulus region is automated.

According to one embodiment, the aortic annulus region is delineated on the first and the last 2D medical slices by a circle restricted to three points defining the aortic valve, wherein the last 2D medical slice is located above the aortic valve.

According to one embodiment, the image processing is automatically computed using a dedicated software.

According to one embodiment, a thresholding is applied on the region.

According to one embodiment, the thresholding of the region is manual.

According to one embodiment, the thresholding of the region is semi-automated.

According to one embodiment, the thresholding of the region is automated.

According to one embodiment, the thresholding of the region comprises the steps of:

- detecting the pixel with the highest signal intensity on 2D medical slices;
- allocating said pixel as a calcification region;
- comparing the difference of intensity between said calcification region's mean intensity and neighborhood pixel's intensity;
- if the difference is below a threshold (t), the pixel is allocated as a calcification region; if the difference is above a threshold (t), the pixel is not allocated as a calcification region;
- repeating preceding steps by including in the calcification region the new pixels allocated;
- ending thresholding when the intensity difference between mean intensity of calcification region and new pixel becomes larger than the threshold (t);
- determining the lowest intensity value of the calcification region; and
- binarizing all 2D medical slices based on said lowest intensity value.

According to one embodiment, the thresholding of the region is individualized for each patient.

According to one embodiment, as illustrated on figure 3, the threshold (t) is 0.025, 0.05, 0.075, 0.1, 0.15, 0.20.

According to one embodiment, the threshold (t) is preferably 0.1. In this embodiment, for 256 gray-scales (8 bits), a threshold (t) of 0.1 is equivalent to 25.6 gray-scales.

According to one embodiment, the image setting and the binary transformed process are standardized.

According to one embodiment, the aortic valve calcification volume is computed using an algorithm.

According to one embodiment, the aortic valve calcification volume is the sum of positive pixels from binary transformed volume multiplied by pixel size, multiplied by the short axis slice thickness.

According to one embodiment, the computing unit determines the aortic valve calcification volume as follows:

$$V = \varepsilon \sum_{k=0}^{n} (positive\ pixel) * P$$

where V is the aortic valve calcification volume (mm$^3$), $\varepsilon$ is the 2D medical slices thickness (mm), n is the number of 2D medical slices, and P is the pixel size (mm$^2$).

According to one embodiment, the aortic valve calcification volume is indexed to left ventricular outflow tract area to obtain $V_{index}$.

According to one embodiment, the time required for image setting, binary transformed process and aortic valve calcification volume computing ranges from 1 to 30 minutes.

According to one embodiment, the time required for image setting, binary transformed process and aortic valve calcification volume computing is preferably below 2 minutes.

According to one embodiment, as illustrated on figure 4, the aortic valve region is divided in four segments and the aortic valve calcification volume heterogeneity is defined as the standard deviation of segmental aortic valve calcification.

## BRIEF DESCRIPTION OF THE DRAWINGS

**Figure 1** illustrates the method for aortic valve calcification determination of the present invention.

**Figure 2** illustrates the image processing of aortic valve calcification by 3D echocardiography. From 3D image acquired from apical view, eight 2D medical slices are extracted and binary transformed to compute an aortic valve calcification volume.

**Figure 2A** illustrates the detection of an aortic valve on a 3D medical image acquired by 3D echocardiography.

**Figure 2B** illustrates the segmentation of the 3D medical image in a thickness in a plurality of 2D medical slices.

**Figure 2C** illustrates the determination of a region on each 2D medical slices.

**Figure 2D** illustrates the thresholding of said region on each 2D medical slices, said thresholding is configured to generate 2D calcification binary images discriminating calcification regions from normal regions.

**Figure 3** illustrates the growing region algorithm as a segmentation image processing method that allows clustering pixels with similar proprieties. The (t) value (threshold similarity coefficient) had been determined in 10 random patients by selecting the best correlation obtained between aortic valve calcification volume and MDCT score. From top to bottom: (t) = 0.2, 0.15, 0.10, 0.25.

**Figure 4** illustrates the method to calculate aortic valve calcium heterogeneity, based on standard deviation of aortic valve calcification volume in each quadrant of aortic valve region.

**Figure 5** illustrates the correlation between aortic valve calcification volume with MDCT score.

**Figure 5A** is a graph representing the correlation between aortic valve calcification volume with MDCT score.

**Figure 5B** is a graph representing the correlation between aortic valve calcification volume index with MDCT score index.

**Figure 6** illustrates the correlation between aortic valve calcification volume with peak aortic valve velocity and aortic valve area.

**Figure 6A** is a graph representing the correlation between aortic valve calcification volume with peak aortic valve velocity.

**Figure 6B** is a graph representing the correlation between aortic valve calcification volume index with peak aortic valve velocity.

**Figure 6C** is a graph representing the correlation between aortic valve calcification volume with aortic valve area.

**Figure 6D** is a graph representing the correlation between aortic valve calcification volume index with aortic valve area.

**Figure 7** are ROC curves for the diagnosis accuracy of aortic valve calcification volume for identifying severe aortic valve stenosis (aortic valve area <1 cm² or mean aortic valve gradient >40 mmHg or peak aortic valve velocity >4 m.s⁻¹).

**Figure 7A** is a ROC curve for the diagnosis accuracy of aortic valve calcification volume for identifying severe aortic valve stenosis (aortic valve area <1 cm² or mean aortic valve gradient >40 mmHg or peak aortic valve velocity >4 m.s⁻¹).

**Figure 7B** is a ROC curve for the diagnosis accuracy of aortic valve calcification volume index for identifying severe aortic valve stenosis (aortic valve area <1 cm² or mean aortic valve gradient >40 mmHg or peak aortic valve velocity >4 m.s⁻¹).

**Figure 8** is a graph showing the association between paravalvular leakage severity after TAVI and aortic valve calcification volume. Absence of regurgitation is (0), mild is (I) and significant is (II).

**Figure 8A** is a graph showing the association between paravalvular leakage severity after TAVI and aortic valve calcification volume.

**Figure 8B** is a graph showing the association between paravalvular leakage severity after TAVI and between aortic valve calcification volume index.

## EXAMPLES

The present invention is further illustrated by the following examples.

All analyses were performed with SPSS for windows. Data are presented as mean ± SD or percentages. Comparisons between groups were performed by student test or variance analysis for continuous variables and $X^2$ test for dichotomous variables. Comparisons between small groups (N<30) were performed by using non parametric test (Mann-Whitney for continuous variables and $X^2$ test with Fischer's correction for dichotomous variables). Aortic valve calcification volume and MDCT score were compared to aortic valve stenosis markers using logarithm regression method. Area under the ROC (Receiver Operator Characteristics) curves was used to determine the accuracy of aortic valve calcification volume indexed for identifying severe aortic valve stenosis. Interclass correlation (ICC) and mean absolute difference between 2 measurements over mean values were used to evaluate reproducibility of aortic valve calcification volume measurements. A P-value < 0.05 was considered as statistically significant.

Example 1: 3D echocardiography aortic valve calcification volume, computed tomography-calcium score and aortic valve stenosis severity

### *Population and Methods*

*Population*

103 consecutive patients referred for aortic valve assessment were screened during one year. Patients with poor acoustic windows preventing 3D full volume dataset acquisition from apical view (N=9), history of aortic valve dilation or replacement (N=5), aortic valve disease with moderate to severe aortic regurgitation (N=4) and history of aortic valve endocarditis (N=1) were excluded. Overall, 84 patients were finally enrolled in the study. Informed consent was obtained according to the institution review board.

*Methods*

*3D echocardiography aortic valve calcification volume:* All echocardiographic data were performed with a VIVID E9 using a commercially available 3D array transducer probe (4V-D probe, GE Vingmed Ultrasound, Horten, Norway). Standard 2D echocardiography included parasternal view for left ventricular outflow tract measurement, 2D apical views (4C, 2C and 3C) for left ventricular ejection fraction assessment, left ventricular outflow tract pulsed Doppler and continuous aortic Doppler flow from apical and modified right parasternal views. Aortic valve area was computed using continuous equation and severe aortic valve stenosis was considered when aortic valve area was <1 $cm^2$ or mean aortic valve gradient >40 mmHg or maximum aortic valve velocity ≥4 m/s. Low-flow was defined as stroke volume index ≤35 $mL/m^2$ and low-gradient as a mean aortic valve gradient ≤40 mmHg. 3D aortic valve imaging was acquired using multi-beat full volume dataset (4 beats, volume rate >10 frames/s) acquired from apical views with a standardized setting [Frequency 1.7/3.3 MHz, gain=14, compression=11, reject=0 and dynamics parameters=6].

Aortic valve calcification volume was determined using the method of the present invention.

*Multidetector computed tomography score (MDCT score)*: Non contrast computed tomography was performed using a multi detector scanner (Discovery CT 750HG, General Electric) using a standardized acquisition protocol; acquisition of 64 (2.5 mm thick) contiguous transverse slices ECG gated, 120 keV, 5 mAs, rotation time of 0.35 s, field of view of 25 cm. aortic valve calcification measurements were performed off-line on dedicated workstation (GE Smartcore 2007) by an experienced operator (JFD) blinded to echocardiography data. Calcification was defined as 4 adjacent pixels with density >130 Hounsfield units. Multidetector computed tomography score was obtained using the Agatston method by manually selecting calcified structure belonging to aortic valve from traverse slices. MDCT score was indexed to left ventricular outflow tract area to obtain MDCT index.

***Results***

Of the 84 patients (82±9 years, aortic valve area=0.9±0.4 $cm^2$), 83% had severe aortic valve stenosis (77% with aortic valve area <1 $cm^2$, 69% with maximum aortic valve velocity >4m.s-1 and 67% with mean gradient >40 mmHg). Left ventricular ejection and stroke volume index averaged 54±10% and 46±12 $mL/m^2$, respectively. Low-flow and low gradient was reported in 6 (7%) patients. Most of patients with severe aortic valve stenosis (N=70) were symptomatic (90%, N=63).

*Multidetector computed tomography score and aortic valve stenosis*

Multidetector computed tomography score assessed in 49 patients [5 patients had low flow-low gradient] averaged 3304±1855 AU [904±485 AU.cm²]. MDCT score index was correlated with mean gradient (R=0.5, P=0.001, R=0.56 without low flow-low gradient patients, P <0.0001) and peak aortic valve velocity (R=0.5, P <0.001 and R=0.64 without low flow-low gradient aortic valve patients, P <0.0001) and aortic valve area (R=0.38, P <0.01, R=0.41 without low flow-low gradient aortic valve patients, P <0.001); R is a correlation coefficient and P is a P-value.

*3D echocardiography aortic valve calcification volume and aortic valve stenosis*

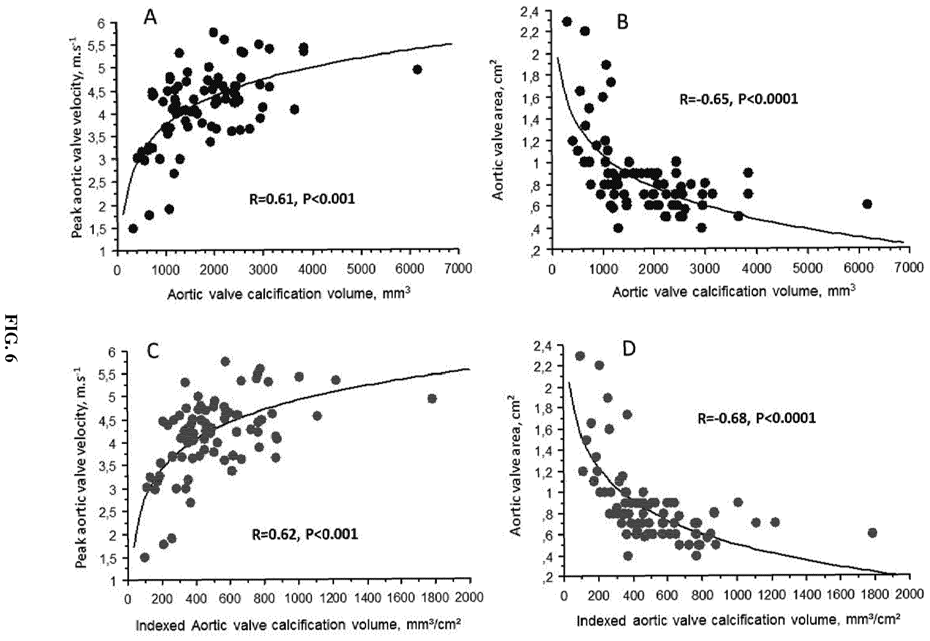

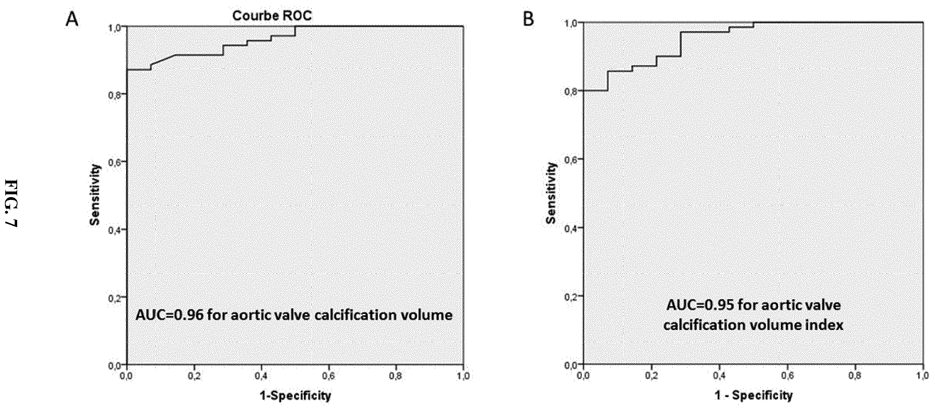

All patients had sufficient 3D medical image quality for computing aortic valve calcification volume (time analysis was <5 minutes). Aortic valve calcification volume averaged 1806±943 $mm^3$ (505±271 $mm^3.cm^{-2}$ for index value). Aortic valve calcification volume was correlated with MDCT score (R=0.48, P <0.001, Figure 5A), mean gradient (R=0.59, P <0.001), peak aortic valve velocity (R=0.61, P <0.001, Figure 6A) and aortic valve area (R=-0.65, P <0.001, Figure 6B). Indexed aortic valve calcification volume was correlated with indexed MDCT score (R=0.48, P <0.001, Figure 5B), mean gradient (R=0.59, P <0.001), peak aortic valve velocity (R=0.61, P <0.001, Figure 6C) and aortic valve area (R=-0.65, P <0.001, Figure 6D). The good correlation between aortic valve calcification volume with aortic valve area and gradient illustrates the accuracy of the method of the invention for assessing aortic valve severity For the diagnosis of severe aortic valve stenosis (excluding low flow-low gradient aortic valve stenosis), the ROC curve of aortic valve calcification volume showed high AUC of 0.96 (Figure 7A), and the ROC curve of indexed aortic valve calcification volume showed high AUC of 0.95 (Figure 7B). A threshold of 1200 $mm^3$ was associated with sensitivity and specificity associated of 87% and 98%, respectively.

Intra-observer and inter-observer variability were evaluated on a subgroup of 10 patients randomly selected and was 4.2% (ICC=0.98) and 8.9% (ICC=0.95), respectively.

Example 2: Paravalvular leakage after trans-aortic valve implantation (TAVI)

***Population and Methods***

*Population*

103 consecutive patients referred for aortic valve assessment were screened during one year. Patients with poor acoustic windows preventing 3D full volume dataset acquisition from apical view (N=9), history of aortic valve dilation or replacement (N=5), aortic valve disease with moderate to severe aortic regurgitation (N=4) and history of aortic valve endocarditis (N=1) were excluded. Overall, 84 patients were finally enrolled in the study. Informed consent was obtained according to the institution review board.

*Methods*

All patients referred to TAVI were systematically evaluated by pre-discharge transthoracic echocardiography. According to the Valve Academic Research Consortium-2 (VARC2), the circumferential extent of paravalvular leakage assessed on parasternal short-axis view was used to grade the severity of aortic valve regurgitation after TAVI. Aortic valve regurgitation was categorized as mild paravalvular leakage when circumferential extent was <10%, moderate when paravalvular leakage circumferential extent ranged between 10-30% and severe when paravalvular leakage circumferential extent was ≥30%. Paravalvular leakage graded as moderate to severe was considered as significant.

Aortic valve calcification volume was determined using the method of the present invention.

***Results***

*Aortic valve stenosis treatment:* TAVI was attempted in 44 patients (N=35 with Corevalve, N=8 with Edwards) and successfully implanted in 43 patients (one death). Aortic valve replacement by conventional surgery was performed in 15 patients (one perioperative death). Among patients treated medically [N=25], 15 patients had severe aortic valve stenosis [3 were asymptomatic and 12 had severe co-morbidities or refused invasive therapy]. At 6-month follow-up, 24% (6/25) of patients medically treated experienced death (N=4, one with low flow-low gradient aortic valve stenosis) or heart failure (N=2). No patient was lost in follow-up.

*Outcome in medically treated population:* In medically treated population, patients who experienced death (N=4) or heart failure (N=2) at 6-month follow-up had greater aortic valve calcification volume ($2325 \pm 955$ mm$^3$ vs. $1141 \pm 570$ mm$^3$, P=0.001 and $642 \pm 254$ mm$^3$.cm$^{-2}$ vs. $319 \pm 163$ mm$^3$.cm$^{-2}$ for index value), greater aortic valve gradient and lower left ventricular ejection fraction.

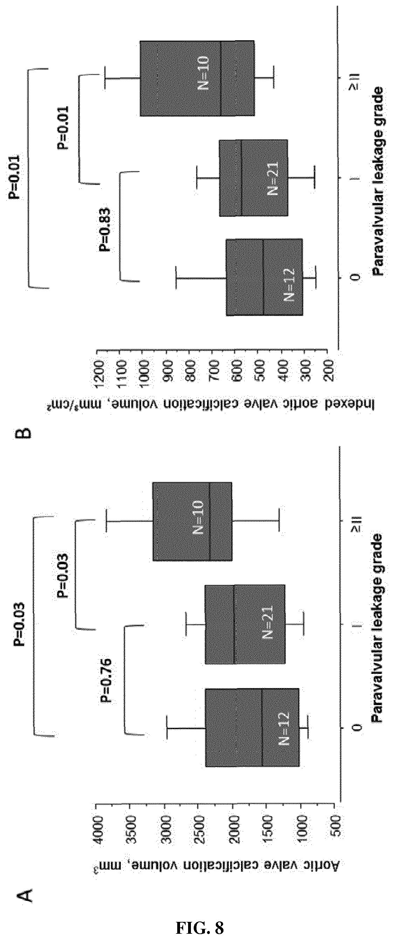

*Paravalvular leakage after TAVI:* After TAVI, 12 patients (28%) had no paravalvular leakage, 21 (49%) had mild and 10 (23%) had significant regurgitation. In the subgroup of 31 patients treated by TAVI, who previously had computed tomography evaluation, 10 (32%) had no paravalvular leakage, 14 (41%) had mild and 7 (23%) had significant paravalvular leakage. Variable associated with significant paravalvular leakage after TAVI included aortic valve calcification volume ($2464 \pm 911$ mm$^3$ vs. $1718 \pm 821$ mm$^3$, P=0.01 and $737 \pm 286$ mm$^3$.cm$^{-2}$ vs. $506 \pm 201$ mm$^3$.cm$^{-2}$, P <0.01 for indexed aortic valve calcification volume, Figure 8), aortic valve mean gradient ($68 \pm 15$ mmHg vs. $47 \pm 12$ mmHg, P <0.001) and aortic valve peak velocity ($5.0 \pm 0.6$ m.s$^{-1}$ vs. $4.2 \pm 0.6$ m.s$^{-1}$, P <0.001). In contrast, significant paravalvular leakage after TAVI was not associated with aortic valve calcification volume heterogeneity ($217 \pm 92$ mm$^3$ vs. $161 \pm 100$ mm$^3$, P=0.14) and MDCT scoring (N=31, $3976 \pm 1708$ vs. $3512 \pm 2109$, P=0.6).

**Claims**

1. A method for aortic valve calcification determination, said method comprising the steps of:

   - detecting an aortic valve on a 3D medical image acquired by a non-invasive, non-radiative medical imaging technique;
   - segmenting the 3D medical image in a thickness in a plurality of 2D medical slices;
   - determining a region on each 2D medical slices;
   - thresholding said region on each 2D medical slices, said thresholding is configured to generate 2D calcification binary images discriminating calcification regions from normal regions; and
   - determining an aortic valve calcification volume.

2. The method for aortic valve calcification determination according to claim **1**, wherein the medical imaging technique does not require any injection of a contrast agent during the procedure.

3. The method for aortic valve calcification determination according to claims **1** or **2**, wherein the medical imaging technique is transthoracic 3D echocardiography.

4. The method for aortic valve calcification determination according to anyone of claims **1** to **3**, wherein the method is based on the detection of an aortic valve on a 3D medical image acquired during systole.

5. The method for aortic valve calcification determination according to anyone of claims **1** to **4**, wherein the 3D medical image of aortic valve region is segmented perpendicularly to a short axis of the aortic valve in a plurality of 2D medical slices.

6. The method for aortic valve calcification determination according to anyone of claims **1** to **5**, wherein the region is determined by delineating the aortic annulus region.

7. The method for aortic valve calcification determination according to anyone of claims **1** to **6**, wherein the aortic annulus region is delineated on the first and the last 2D medical slices by a circle restricted to at least three points defining the aortic valve, wherein:

- the first 2D medical slice is located under the aortic valve at the level of left ventricular outflow tract;
- the last 2D medical slice is located above the aortic valve; and
- a cylinder formed by these two circles defines the region, making it possible to obtain a circle on each 2D medical slice along the valve axis.

8. The method for aortic valve calcification determination according to anyone of claims **1** to **7**, wherein the thresholding of the region comprises the steps of:

- detecting the pixel with the highest signal intensity on 2D medical slices;
- allocating said pixel as a calcification region;
- comparing the difference of intensity between said calcification region's mean intensity and neighborhood pixel's intensity;
- if the difference is below a threshold (t), the pixel is allocated as a calcification region; if the difference is above a threshold (t), the pixel is not allocated as a calcification region;
- repeating preceding steps by including in the calcification region the new pixels allocated;
- ending thresholding when the intensity difference between mean intensity of calcification region and new pixel becomes larger than the threshold (t);
- determining the lowest intensity value of the calcification region; and
- binarizing all 2D medical slices based on said lowest intensity value.

9. The method for aortic valve calcification determination according to anyone of claims **1** to **8**, wherein the threshold (t) is 0.1.

10. The method for aortic valve calcification determination according to anyone of claims **1** to **9**, wherein the aortic valve calcification volume is the sum of positive pixels from binary transformed volume multiplied by pixel size, multiplied by the short axis slice thickness.

11. The method for aortic valve calcification determination according to anyone of claims **1** to **10**, wherein the aortic valve region is divided in four segments and an aortic valve calcification volume heterogeneity coefficient is defined as a standard deviation of segmental aortic valve calcification between the four aortic valve calcification volumes of said segments.

12. The method for aortic valve calcification determination according to anyone of claims **1** to **11** further comprising determining the suitability of a patient for trans-aortic valve implantation (TAVI) procedure based on aortic valve calcification volume, or determining the severity of aortic valve stenosis for a patient based on aortic valve calcification, or determining the risk of stroke of a patient based on aortic valve calcification volume, or determining the best position for an aortic valve implant based on aortic valve calcification volume and binary images.

13. A system for aortic valve calcification determination, said system comprising:

- a computing unit for:

- detecting an aortic valve on a 3D medical image acquired by a non-invasive, non-radiative medical imaging technique;
- segmenting the 3D medical image in a thickness in a plurality of 2D medical slices;
- determining a region on each 2D medical slices;
- thresholding said region on each 2D medical slices, said thresholding is configured to generate 2D calcification binary images discriminating calcification regions from normal regions; and
- determining an aortic valve calcification volume.

- a memory comprising the 3D medical image, the 2D medical slices, the threshold (t), the 2D calcification binary images and the aortic valve calcification volume;

wherein the memory is connected to the computing unit.

14. The system for aortic valve calcification determination according to claim **13**, wherein the thresholding of the region comprises the steps of:

- detecting the pixel with the highest signal intensity on 2D medical slices;
- allocating said pixel as a calcification region;
- comparing the difference of intensity between said calcification region's mean intensity and neighborhood pixel's intensity;
- If the difference similarity is below a (t) threshold similarity coefficient, the pixel is allocated as a calcification region; if the difference similarity is below a (t) threshold similarity coefficient, the pixel is allocated as a calcification region;
- repeating preceding steps by including in the calcification region the new pixels allocated;
- ending thresholding when the intensity difference between mean intensity of calcification region and new pixel becomes larger than a certain threshold similarity coefficient (t);
- determining a high intensity and a low intensity values corresponding to the calcification region, said low intensity value is used as a threshold defining the calcification region; and
- extending to all the 2D medical slices by binarizing them (below the threshold = black, greater than the threshold = white).

**15.** The system for aortic valve calcification determination according to claim **13** or claim **14**, wherein the sum of positive pixels from binary transformed volume was adjusted to pixel scale and short axis slice thickness to compute the aortic valve calcification volume.

detecting aortic valve on a 3D medical image acquired by a non-invasive, non-radiative medical imaging technique

segmenting the 3D image in the thickness in a plurality of 2D medical slices

determining a region on the 2D medical slices

thresholding said region on the 2D medical slices

generating 2D calcification binary images based on the thresholding of the region on the 2D medical slices

computing an aortic valve calcification volume

**FIG. 1**

**FIG. 2**

FIG. 3

FIG. 4

**FIG. 5**

FIG. 6

FIG. 7

FIG. 8

Europäisches
Patentamt

European
Patent Office

Office européen
des brevets

# EUROPEAN SEARCH REPORT

Application Number

EP 17 15 5283

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | G J Morgan-Hughes ET AL: "Three dimensional volume quantification of aortic valve calcification using multislice computed tomography Objective", Heart, 1 January 2003 (2003-01-01), pages 1191-1194, XP055366947, Retrieved from the Internet: URL:https://www.ncbi.nlm.nih.gov/pmc/articles/PMC1767906/pdf/hrt08901191.pdf | 1-5, 9-13,15 | INV. G06T7/11 G06T7/62 |
| Y | * abstract *<br>* figure 1 *<br>* sections "Multislice CT acquisition", "Quantification of AVC" * | 6,7 | |
| A | SEUNG CHOUL LEE ET AL: "Morphological assessment of the aortic valve using coronary computed tomography angiography, cardiovascular magnetic resonance, and transthoracic echocardiography: comparison with intraoperative findings", THE INTERNATIONAL JOURNAL OF CARDIAC IMAGING, KLUWER ACADEMIC PUBLISHERS, DO, vol. 28, no. 1, 17 May 2012 (2012-05-17), pages 33-44, XP035083869, ISSN: 1573-0743, DOI: 10.1007/S10554-012-0066-9<br>* abstract *<br>* figure 4 * | 1,13 | TECHNICAL FIELDS SEARCHED (IPC)<br><br>G06T |
| X,D | US 2013/155064 A1 (GRBIC SASA [DE] ET AL) 20 June 2013 (2013-06-20)<br>* abstract *<br>* figures 1,2 *<br>* "ultrasound"; paragraph [0017] *<br>* paragraph [0022] - paragraph [0023] * | 1,13 | |

-/--

The present search report has been drawn up for all claims

| Place of search | Date of completion of the search | Examiner |
|---|---|---|
| Munich | 11 May 2017 | Scholz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

| | Europäisches Patentamt European Patent Office Office européen des brevets | **EUROPEAN SEARCH REPORT** | Application Number EP 17 15 5283 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JAN DE VAAN ET AL: "The 3mensio Valves(TM) multimodality workstation", EUROINTERVENTION, vol. 7, no. 12, 1 April 2012 (2012-04-01), pages 1464-1469, XP055367036, FR ISSN: 1774-024X, DOI: 10.4244/EIJV7I12A228 | 1,13 | |
| Y | * abstract * * figures 1,2,5 * * section "Introduction", "Description". * ----- | 6,7 | |
| X | PieMedicalImaging: "Presentation of 3mensio Valves at EuroPCR by Lutz Buellesfeld", youtube, 21 June 2011 (2011-06-21), page 3 pp., XP054977304, Retrieved from the Internet: URL:https://www.youtube.com/watch?v=uMaB3x2fJTE [retrieved on 2017-05-03] | 1,13 | |
| Y | * The video at 1:35, 2:00 and 4:00 minutes. * ----- | 6,7 | TECHNICAL FIELDS SEARCHED (IPC) |
| A | V. . ET AL: "A BRIEF REVIEW OF SEGMENTATION METHODS FOR MEDICAL IMAGES", International Journal of Research in Engineering and Technology, 25 January 2014 (2014-01-25), pages 421-427, XP055368010, DOI: 10.15623/ijret.2014.0301073 Retrieved from the Internet: URL:http://esatjournals.net/ijret/2014v03/i01/IJRET20140301073.pdf * section 3 * ----- | 8,14 | |

The present search report has been drawn up for all claims

| Place of search | Date of completion of the search | Examiner |
|---|---|---|
| Munich | 11 May 2017 | Scholz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 5283

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2017

| Patent document cited in search report | Publication date | Patent family member(s) | Publication date |
|---|---|---|---|
| US 2013155064 A1 | 20-06-2013 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013155064 A

**Non-patent literature cited in the description**

- **ZHANG Q. et al.** *Ultrasound in Medecine and Biology,* 2010, vol. 36 (1), 111-129
- **CLAVEL et al.** *Journal of the American College of Cardiology,* 2014, vol. 64 (12), 1202-1213